# EUROPÄISCHE PATENTSCHRIFT

(11) **EP 3 538 384 B1**
(45) Veröffentlichungstag und Bekanntmachung des Hinweises auf die Patenterteilung: **07.10.2020**
(21) Anmeldenummer: 17762057.2
(22) Anmeldetag: 22.08.2017
(51) Int. Cl.: B60C 11/16

(54) **FAHRZEUGREIFEN**
VEHICLE TIRE
PNEUMATIQUE DE VÉHICULE

(30) Priorität: 08.11.2016 DE 102016221854
(43) Veröffentlichungstag der Anmeldung: 18.09.2019
(73) Patentinhaber: Continental Reifen Deutschland GmbH, 30165 Hannover (DE)
(72) Erfinder: SCHLITTENHARD, Jan, 30900 Wedemark (DE)
(74) Vertreter: Finger, Karsten
(86) Internationale Anmeldenummer: PCT/EP2017/071062
(87) Internationale Veröffentlichungsnummer: WO 2018/086775

(56) Entgegenhaltungen:
- WO-A1-2009/144198
- DE-A1-102015 219 368

## Beschreibung

Die Erfindung betrifft einen Fahrzeugreifen mit Laufstreifenprofil und Spikelöchern zur Aufnahme von Spikes, welche in radialer Richtung R nach innen hin jeweils von einem Lochgrund begrenzt werden.

Derartige Fahrzeugreifen sind bekannt.

Zur Aufnahme der Spikes sind im Laufstreifenprofil des Fahrzeugluftreifens üblicherweise speziell ausgebildete Spikelöcher ausgebildet. Die Hauptaufgabe dieser Spikelöcher besteht darin, eine feste Verankerung des Spikes in der Gummimatrix des Laufstreifens zu ermöglichen und somit einen Spikeverlust beim Abrollen des Fahrzeugreifens im Einsatz zu vermeiden. Die Lochgeometrie des Spikelochs ist dabei üblicher Weise der Spikekörpergeometrie angepasst, jedoch deutlich kleiner als der Spikekörper des Spikes. Die Spikes werden dann mit ihrem Spikekörper in diese kleineren Spikelöcher regelrecht eingepresst. Dies führt zu starker Verspannungen in der den Spike umgebenden Gummimatrix, welche die gewünschten Haltekräfte erzeugen.

Diese Verspannungen haben jedoch auch einen massiven Einfluss auf die seitliche Abstützung des Spikes und damit auf eine Bettungssteifigkeit des Spikes im Reifen, sowohl in Reifenquerrichtung als auch in Umfangsrichtung des Reifens. Über hierdurch bedingte Spikeverkippungen werden auch Brems- und Traktionseigenschaften sowie Seitenführungseigenschaften der Spikes mit beeinflusst. Darüber hinaus beeinflussen die Verspannungen auch die radiale Bettungssteifigkeit des Spikes und somit die Aufstandskraft des Spikes auf der Straßenoberfläche und die Fähigkeit des Spikes, bei Kontakt mit der Straßenoberfläche in die flexible Gummimatrix abzutauchen.

Bei den herkömmlich ausgebildeten Spikelöchern führt die dort rein auf die Erzielung der Haltekräfte fixierte Ausbildung somit aufgrund der hierdurch bedingten Verspannungen zu unerwünschten Kippeffekten einerseits und zu hartem Straßenaufschlag andererseits, wodurch die Straßenoberfläche unerwünscht stark in Mitleidenschaft gezogen wird.

Aus der DE 22 420 36 ist es bekannt, im Spikelochgrund eines Spikelochs eine zentrale, im Wesentlichen kreisförmige Vertiefung auszubilden, welche nach Einbringen des Spikes mit der Unterseite des Spikefußes eine zentrale Hohlkammer bilden soll. Diese Hohlkammer soll eine Lufttasche bilden. Die Lufttasche soll als Dämpfungselement fungieren, so dass bei Belastung des Spikes durch Kompression der im Hohlraum eingeschlossenen Luft eine Dämpfung ermöglicht wird. Diese könnte in radialer Richtung und auch gegen Verkippen dämpfen. Allerdings erfolgt die Dämpfung rein durch die Kompression der Luft. Die Haltekräfte werden dann durch das außerhalb dieser zentralen, kreisförmigen Hohlkammer noch als Restmenge ausgebildete, ringförmige Gummirandmaterial bewirkt. Die in radialer Richtung des Reifens nach außen hin wirkende Stützwirkung des Gummimaterials ist bei einer derartigen Ausbildung jedoch nur gering, so dass der Spike bereits bei geringen von der Straße einwirkenden Kräften unkontrolliert unter Kompression der Luft vollständig nach radial innen wegtauchen kann und somit jegliche Griffwirkung auf Eis verliert. Der schmale, ringförmige Gummirandbereich außerhalb der Hohlkammer kann bei Belastungen vom Spikefuß radial vom Zentrum der Hohlkammer weg gepresst werden, wodurch ein unkontrolliert kippendes Abrutschen und Wegtauchen des Spikes weiter begünstigt wird. Die Dämpfungswirkung der in der Hohlkammer ausgebildeten Luft ist zu gering um wirksame Dämpfung zu ermöglichen. Die vom ringförmig die zentrale Hohlkammer umgebenden Gummirand ausgewirkte Dämpfungswirkung kann auch kaum entfaltet werden.

Das Einformen des Spikelochs in das Laufstreifenmaterial erfolgt üblicherweise in der Vulkanisationsform. Hierzu wird ein in der Vulkanisationsform befestigter und der gewünschten Form des Spikelochs entsprechend negativ ausgebildeter Formpin bei der Ausformung des Laufstreifenprofils in radialer Richtung des Reifenrohlings in das Kautschukmaterial des Laufstreifens eingepresst. Bei modernen Fahrzeugreifen, bei denen der Laufstreifen üblicherweise aus Cap und Base gefertigt wird, kann bei dieser Ausformung des aus der DE 22 420 36 bekannten Spikelochs, beim Einpressen des Formpins das im radial äußeren Erstreckungsabschnitt des Laufstreifenprofils ausgebildete Gummikautschukmaterial des Capstreifens, in dem im Bereich des Spikelochs gewünschten Materialbereichs des Basestreifens unkontrolliert miteingepresst werden. Beim ausvulkanisierten Fahrzeugluftreifen wird hierdurch die ohnehin bereits nur geringe Stützwirkung des die zentrale Hohlkammer umgebenden Gummirandes weiter unkontrolliert verschlechtert.

Die Ausbildung des bekannten Fahrzeugluftreifens ermöglicht somit keine gezielte Dämpfungswirkung des Spikes, sondern lediglich ein unkontrolliertes Wegtauchen. Die eigentlich durch die Spikes gewünschte Griffwirkung auf Eis wird somit hierdurch massiv und unkontrolliert beeinträchtigt, ohne jedoch eine zuverlässige Dämpfung der Spikes und somit einen Schutz der Straßenoberfläche zu ermöglichen.

Der DE 22 42 036 ist darüber hinaus eine weitere Ausführung eines Spikelochs zu entnehmen, bei der eine ringförmige Vertiefung im Spikelochboden ausgebildet ist, welche nach Einsetzen des Spikes zwischen Spikeboden und ringförmiger Vertiefung eine geschlossene ringförmige Hohlkammer erzeugt, in welcher die darin eingeschlossene Luft die Dämpfung bewirken soll. Das innerhalb der ringförmigen Vertiefung von der ringförmigen Vertiefung umschlossene Gummimaterial soll und kann vielleicht eine begrenzte Stützwirkung der Spikes ermöglichen. Allerdings ist auch bei dieser Ausbildung bei Belastung des Spikes ein einfaches Ausweichen des Gummimaterials im Bereich des Spikebodens unkontrolliert möglich. Der außerhalb der Vertiefung verbleibende Restgummistreifen kann in einfacher Weise mehr oder weniger zentrisch von der Ringkammer weggepresst oder in die Ringkammer eingepresst werden. Der von der ringförmigen Vertiefung umschlossene zentrale Bereich kann einfach in radialer Richtung des Reifens oder in radialer Richtung des Ringes ausweichen und mehr oder weniger unkontrolliert den Hohlraum füllen. Die Dämpfungswirkung des im Hohlraum eingeschlossenen Gummimaterials ist auch bei dieser Ausführung gemessen an den wirksamen Kräften relativ klein. Der von der ringförmigen Vertiefung umschlossene Gummiabschnitt im Spikelochboden hat keinerlei seitliche Versteifung und kann bereits bei relativ geringen Belastungen unkontrolliert in den Hohlraum eindringen, wodurch der Spike einfach unkontrolliert abtauchen kann. Die Griffwirkung der Spikes ist somit auch bei dieser Ausbildung nicht sichergestellt, ohne jedoch eine ausreichend gute Dämpfungswirkung gegen radiale Belastung der Spikes oder gegen Verkippen der Spikes sicher zu ermöglichen. Darüber hinaus wird auch bei dieser Ausbildung die bei der Ausformung des Spikeloches mit Hilfe eines Formpins in der Vulkanisationsform ermöglichte unkontrollierte Einbringung von Capmaterial in den Bereich des Spikelochbodens ermöglicht. Die ringförmige Vertiefung, die den von der ringförmigen Vertiefung umschlossenen Gummiflächenabschnitt des Spikelochbodens von dem außerhalb des ringförmigen Vertiefung umgebenden Gummimaterials trennt, führt bei dieser Ausführung zu eine unkontrollierten Entkopplung des Gummimaterials im Bereich des Spikelochbodens. Eine sichere Dämpfung ist hierdurch gerade bei modernen Cap- und Baselaufstreifen kaum erzielbar. Durch die eher zufälliger Verteilung des bei der Einformung in den Bereich des Spikelochbodens mitgenommenen Capmaterials mit seiner gegenüber dem Base-Material höheren Dämpfungseigenschaft wird eine zufällige Dämpfung in die eine oder andere Richtung ermöglicht. Beim Abrollen auf Eis, kann der Spike mehr oder weniger machen, was er will.

Wenn das Cap-Material in den Bereich der Vertiefung selbst mit hinein verformt wird, können die unkontrollierten Abtaucheffekte noch weiter verstärkt auftreten.

Der Erfindung liegt daher die Aufgabe zugrunde, bei Fahrzeugluftreifen mit Spikes eine gute Dämpfung der Spikes im Bereich der Spikelöcher zu ermöglichen und dabei ein unerwünschtes Wegtauchen der Spikes im Spikeloch zu vermeiden.

Die Aufgabe wird erfindungsgemäß durch die Ausbildung eines Fahrzeugreifens mit Laufstreifenprofil und Spikelöchern zur Aufnahme von Spikes, welche in radialer Richtung R nach innen hin jeweils von einem Lochgrund begrenzt werden, gemäß den Merkmalen von Anspruch 1 gelöst, bei dem auf einer ringförmigen Fläche des Lochgrunds mehrere, jeweils voneinander beabstandete Vertiefungen in Umfangserstreckungsrichtung des Rings in einer Reihe hintereinander verteilt angeordnet sind.

Die Ausbildung ermöglicht es, dass der Spikelochboden über seinen gesamten Erstreckungsbereich vom Zentrum des Spikelochbodens bis zum äußeren Rand außerhalb der ringförmigen Fläche zwischen den Vertiefungen hindurch versteifend angebunden ist. Nach Einsetzen des Spikes ist hierdurch zwischen den innerhalb der ringförmigen Fläche hintereinander angeordneten Vertiefungen die Anbindung des von der ringförmigen Fläche umschlossenen Bereichs des Spikelochbodens an das außerhalb des ringförmigen Bereichs umgebende Gummimaterialabschnitt gesichert, wodurch eine ausreichende Steifigkeit des Gummibodens im Spikeloch sichergestellt werden kann. Nach Einsetzen der Spikes in das Spikeloch kann das die Vertiefungen umgebende Gummimaterial entsprechend den einwirkenden Belastungen in die Vertiefungen eindringen, wodurch eine Dämpfung bewirkt wird. Die Verteilung und Hintereinander-Anordnung der Vertiefungen innerhalb einer ringförmigen Fläche ermöglicht dabei, dass ein den Belastungen des Spikes entsprechendes, gezieltes Ausweichen des Gummimaterials in die Richtung der Vertiefungen des Spikelochs bewirkt wird, auch wenn das Gummimaterial außerhalb der mit den Vertiefungen ausgebildeten ringförmigen Fläche stärker gedehnt wird als das Gummimaterial in dem von der ringförmigen Fläche umschlossenen Abschnitt. Dieser von der ringförmigen Fläche umschlossene innere Abschnitt wird somit nicht so stark verspannt wie der außerhalb der ringförmigen Fläche ausgebildete Gummiabschnitt und kann auf diese Weise durch Kompression des Gummimaterials gute Dämpfungswirkung entfalten. Die zwischen den Vertiefungen ausgebildeten Anbindungen des inneren Abschnitts an den äußeren, die ringförmige Fläche umschließenden Abschnitt sichert darüber hinaus eine ausreichende Steifigkeit des Spikelochbodens, wodurch ein ungewünschtes Wegtauchen der Spikes zielgerecht wirksam verhindert werden kann. Dabei kann durch die Wahl der Position und der Breite der Anbindungen die Steifigkeit und das Dämpfungsverhalten gezielt nach den Erfordernissen des jeweiligen Reifens und dessen Einsatz individuell eingestellt werden. Diese durch die Anbindung gebildeten Stege im Bereich des Spikelochbodens behindern darüber hinaus auch ein unkontrolliertes Verbleiben von Capmaterial beim Einformen der Spikelöcher. Bei der Ausbildung wird das Capmaterial bei der Einformung nicht durch eine einzige ringförmige Vertiefung eingeschlossen - wie im Stand der Technik -, sondern kann durch die zwischen den auf der ringförmigen Fläche ausgebildeten Vertiefungen ausgebildeten Kanälen beim Einformen vom Basematerial herausgedrückt und verdrängt werden.

Besonders vorteilhaft ist die Ausbildung eines Fahrzeugreifens gemäß den Merkmalen von Anspruch 2, wobei die Vertiefungen in Umfangserstreckungsrichtung des Rings gleichmäßig verteilt angeordnet sind. Hierdurch kann in einfacher Weise eine gleichmäßige Verspannung des zentralen Dämpfungselements im Spikelochboden eingestellt werden. Dadurch wird bei Einbringen des Spikes das zentrale Dämpfungselement in alle Richtungen ähnlich beansprucht und ähnlich verspannt.

Besonders vorteilhaft ist die Ausbildung eines Fahrzeugreifens gemäß den Merkmalen von Anspruch 3, wobei die Vertiefungen in der ringförmigen Fläche mit gleicher Tiefe ausgebildet sind. Hierdurch wird eine Vergleichmäßigung der Entkopplung des zentralen Dämpfungselementes im Spikelochboden begünstigt.

Besonders vorteilhaft ist die Ausbildung eines Fahrzeugreifens gemäß den Merkmalen von Anspruch 4, wobei die Vertiefungen in der ringförmigen Fläche mit unterschiedlicher Tiefe ausgebildet sind. Hierdurch kann in einfacher Weise die Bettungssteifigkeit richtungsabhängig von den erwarteten Belastungen individuell gut eingestellt werden.

Besonders vorteilhaft ist die Ausbildung eines Fahrzeugreifens gemäß den Merkmalen von Anspruch 5, wobei die Vertiefungen der ringförmigen Fläche jeweils mit - insbesondere gleich großer - senkrecht zur Umfangserstreckungsrichtung der ringförmigen Fläche gemessener Breite b mit 0,2mm≤b≤1,5mm ausgebildet sind. Mithilfe der Auslegung der Breite b der ringförmigen Fläche kann mit einfachen Mitteln die Größe des zentralen Dämpfungselementes und damit dessen Dämpfungseigenschaften beeinflusst werden. Dabei ist die Breite b ausreichend groß, um eine Entkopplung und gute Einstellung wirksam zu ermöglichen, und ausreichend klein, um eine steife Anbindung des zentralen Dämpfungselementes an die die ringförmige Fläche umgebende Gummimatrix zu ermöglichen und die Entstehung eines Hohlraums unter dem Spike und ein Abtauchen des Spikes unter Belastung wirksam zu verhindern.

Besonders vorteilhaft ist die Ausbildung eines Fahrzeugreifens gemäß den Merkmalen von Anspruch 6, wobei die Vertiefungen der ringförmigen Fläche jeweils mit gleicher, längs der Umfangserstreckungsrichtung der ringförmigen Fläche gemessener Länge L ausgebildet sind. Hierdurch wird zusätzlich eine Vergleichmäßigung der Bettungssteifigkeit ermöglicht.

Besonders vorteilhaft ist die Ausbildung eines Fahrzeugreifens gemäß den Merkmalen von Anspruch 7, wobei die Vertiefungen der ringförmigen Fläche jeweils über einen Umfangserstreckungswinkel α der ringförmigen Fläche erstreckt sind mit 5°≤α≤120°.

Besonders vorteilhaft ist die Ausbildung eines Fahrzeugreifens gemäß den Merkmalen von Anspruch 8, wobei die Vertiefungen der ringförmigen Fläche mit zumindest zum Teil unterschiedlicher, längs der Umfangserstreckungsrichtung der ringförmigen Fläche gemessener Länge L ausgebildet sind. Die Ausbildung ist besonders vorteilhaft für den Einsatz für Spikelöcher mit nicht kreisrunden, sondern eher elliptischen oder ovalen Formen von Formpins und Spikes. Da solche Formen häufig in eine bestimmte Richtung im Reifenprofil orientiert und in ihrer Ausgestaltung auf die bevorzugten Belastungsrichtungen angepasst sind. Die unterschiedliche Längenausbildung der Vertiefungen kann in einfacher Weise den bevorzugten Belastungsrichtungen mit erweichenden Vertiefungen und versteifenden Anbindungen Rechnung getragen werden.

Besonders vorteilhaft ist die Ausbildung eines Fahrzeugreifens gemäß den Merkmalen von Anspruch 9, wobei eine oder mehrere der Vertiefungen der ringförmigen Reihe in Spikelochgrund mit ringsegmentförmiger Kontur ausgebildet sind. Die Ausbildung eignet sich besonders gut zur Gestaltung der Bettungssteifigkeit bei nicht "kreisrunden", sondern eher ovalen oder elliptischen Spikeformen.

Besonders vorteilhaft ist die Ausbildung eines Fahrzeugreifens gemäß den Merkmalen von Anspruch 10, wobei im Lochgrund vier hintereinander angeordnete - insbesondere konzentrische - ringsegmentförmige Vertiefungen ausgebildet sind. Hierdurch kann besonders gut die Bettungssteifigkeit beeinflusst werden.

Die Erfindung wird im Folgenden an Hand der in den Figuren 1 bis 13 dargestellten Ausführungsbeispiele näher erläutert. Hierin zeigen
- Fig.1: eine Querschnittsdarstellung eines Fahrzeugluftreifens mit Spikelöchern,
- Fig.2: den Fahrzeugluftreifen von Fig. 1 mit in den Spikelöchern eingepressten Spikes, wobei die Spikes vergrößert dargestellt sind,
- Fig.3: mit den Fig.3a bis Fig.3d Darstellungen eines vergrößert dargestellten Spikelochs, wobei
- Fig.3a: die Darstellung des Spikelochs gemäß Blick IIIa-IIIa der Figuren 3b und 3c mit Blick auf den Spikelochgrund,
- Fig.3b: das Spikeloch von Fig.3a in Schnittrichtung gemäß Schnitt IIIb-IIIb von Fig.3a,
- Fig.3c: das Spikeloch von Fig.3a in Schnittdarstellung gemäß Schnitt IIIc-IIIc von Fig.3a und
- Fig.3d: das Spikeloch in der Darstellung von Fig.3b, jedoch mit eingesetztem Spike, darstellt,
- Fig.4: mit den Figuren 4a bis 4d zur Erläuterung eines Formpin zur Ausformung des Spikelochs der Figuren 3a bis 3d, wobei
- Fig. 4a: den Formpin in Seitenansicht,
- Fig. 4b: den Formpin in Draufsicht gemäß Ansicht IVb-IVb von Fig.4a,
- Fig. 4c: den Formpin in perspektivischer Darstellung und
- Fig. 4d: den durch den Formpin als Negativ erzeugten Spikelochgrund zeigt, welcher der Darstellung der Fig.3a entspricht,
- Fig.5: mit den Fig.5a und 5b ein Spikeloch mit alternativer Ausbildung des Spikegrundes, wobei
- Fig.5a: analog zur Darstellung von Fig.3a den Blick auf den Spikelochgrund und
- Fig.5b: analog zur Darstellung von Fig.3d das Spikeloch mit eingesetztem Spike zeigt,
- Fig. 6: mit den Figuren 6a bis 6d zur Erläuterung eines Formpins zur Ausformung des in den Figuren 5a und 5b dargestellten Spikelochs, wobei
- Fig.6a bis 6c: analog zu den Darstellungen der Figuren 4a bis 4c den Formpin und
- Fig.6d: den durch den Formpin erzeugten Spikelochgrund zeigt, welcher der Darstellung von Fig.5a entspricht,
- Fig. 7: ein Spikeloch mit alternativer Ausbildung des Spikelochgrunds analog zur Darstellung der Fig.3d in einer Darstellung mit eingesetztem Spike,
- Fig. 8: mit den Figuren 8a bis 8d zur Erläuterung eines Formpins zur Ausformung des Spikelochs von Fig.7, wobei
- Fig.8a bis 8c: analog zur Darstellung der Figuren 4a bis 4c den Formpin und
- Fig.8d: den hierdurch erzeugten Spikelochgrund zeigt, analog zur Darstellung von Fig.4d,
- Fig.9: in den Figuren 9a bis 9e zur Erläuterung eines Formpins zur Erzeugung eines Spikelochs mit alternativ ausgebildetem Spikelochgrund, wobei
- Fig.9c: analog zur Darstellung der Fig.4b den Formpin in Draufsicht,

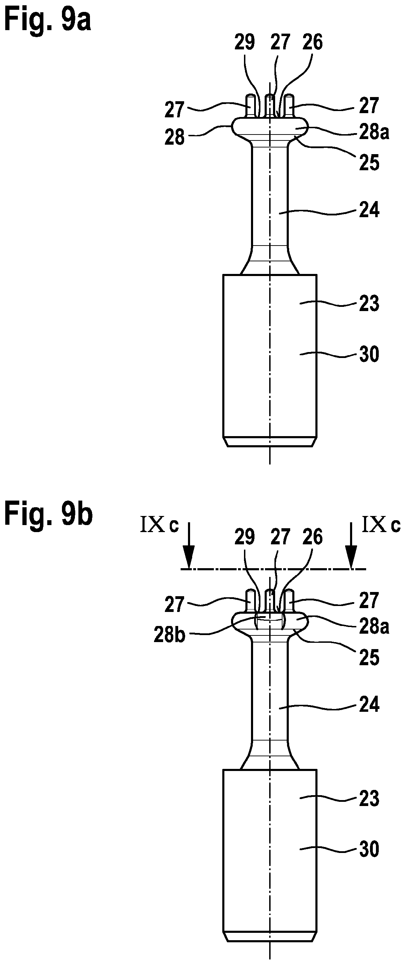

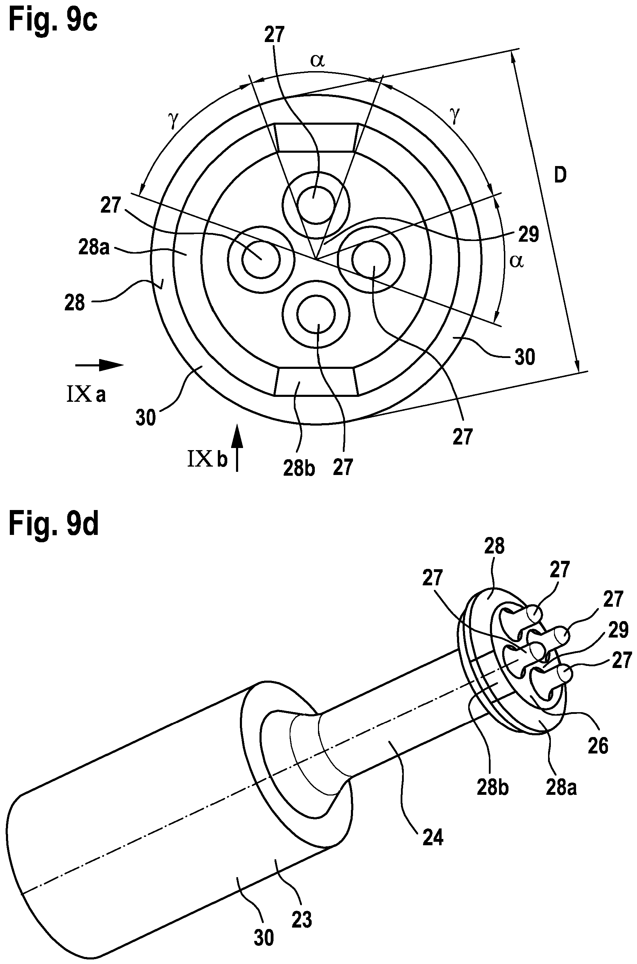

- Fig.9a: den Formpin in Seitenansicht gemäß Ansicht IXa-IXa von Fig.9c,
- Fig.9b: den Formpin in Seitenansicht gemäß Ansicht IXb-IXb von Fig.9c und
- Fig.9d: den Formpin in perspektivischer Darstellung und

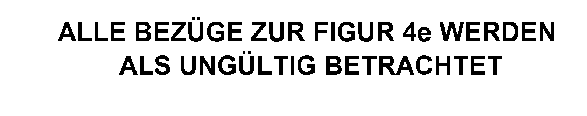

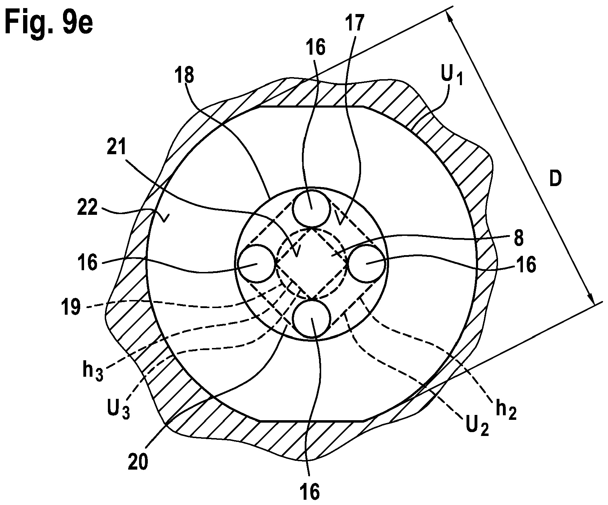

- Fig.9e: den durch den Formpin erzeugten Spikelochgrund - analog zur Darstellung der Fig.4e - zeigt,

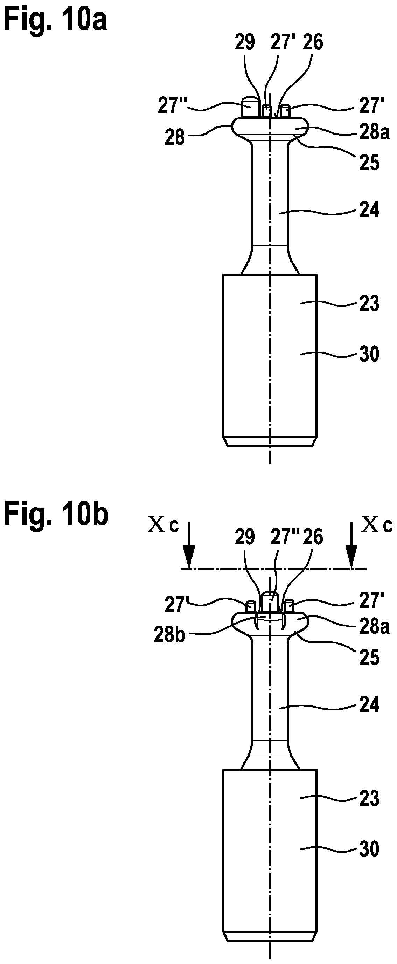

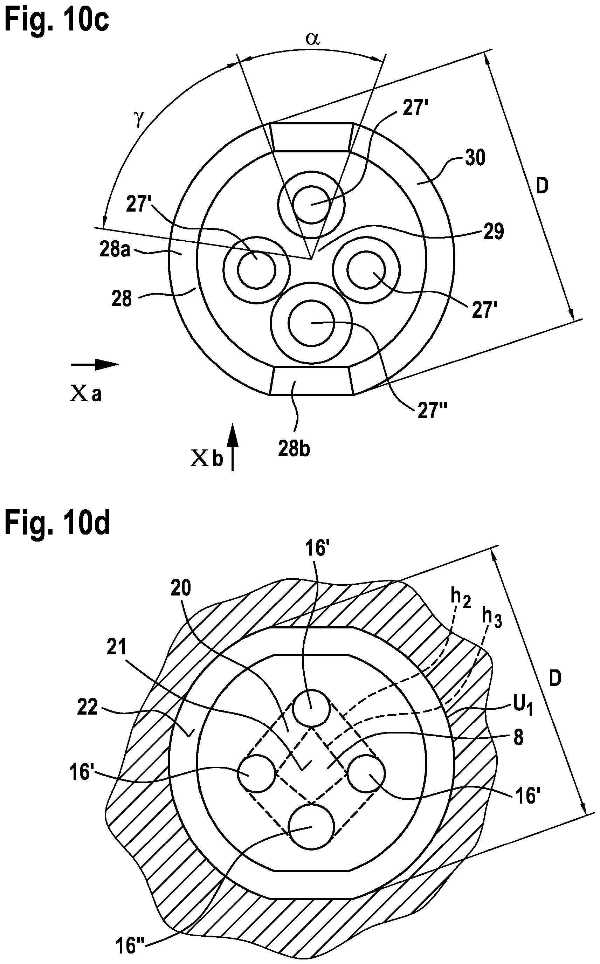

- Fig. 10: in den Figuren 10a bis 10d zur Erläuterung eines Formpins zur Erzeugung eines Spikelochs mit weiterem alternativ ausgebildetem Spikelochgrund, wobei

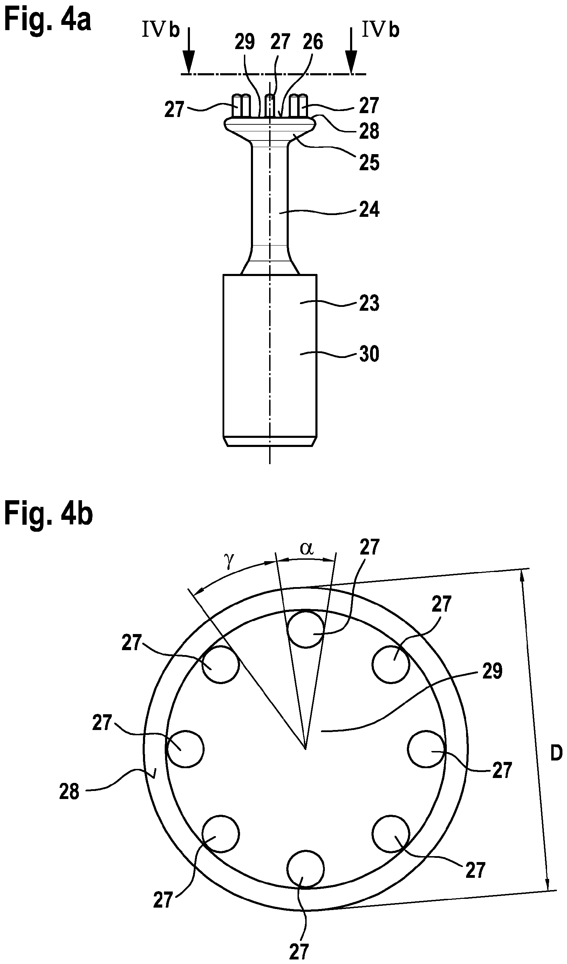

- Fig.10c: analog zur Darstellung der Fig.4b den Formpin in Draufsicht,
- Fig.10a: den Formpin in Seitenansicht gemäß Ansicht Xa-Xa von Fig.10c,
- Fig.10b: den Formpin in Seitenansicht gemäß Ansicht Xb-Xb von Fig.10c und
- Fig.10d: den durch den Formpin erzeugten Spikelochgrund - analog zur Darstellung der Fig.4e- zeigt,

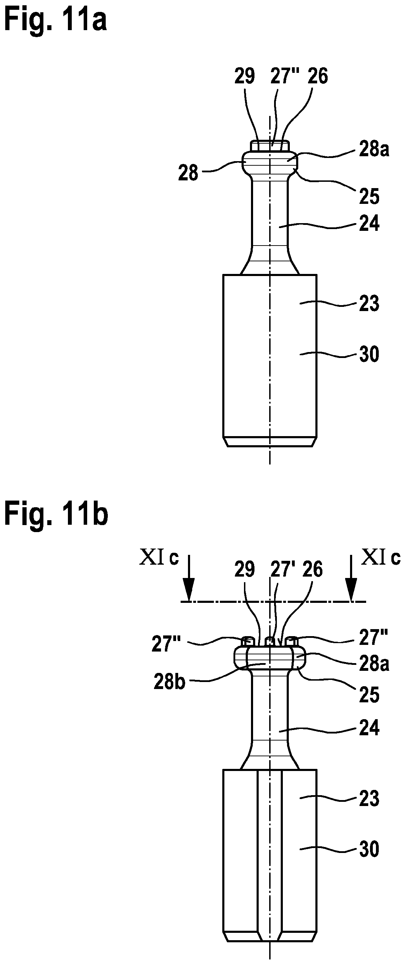

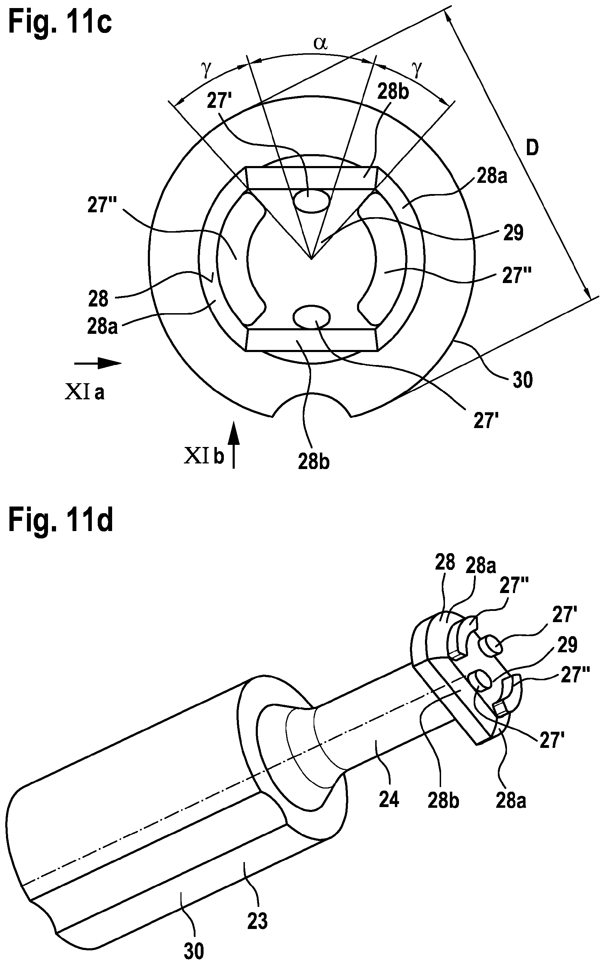

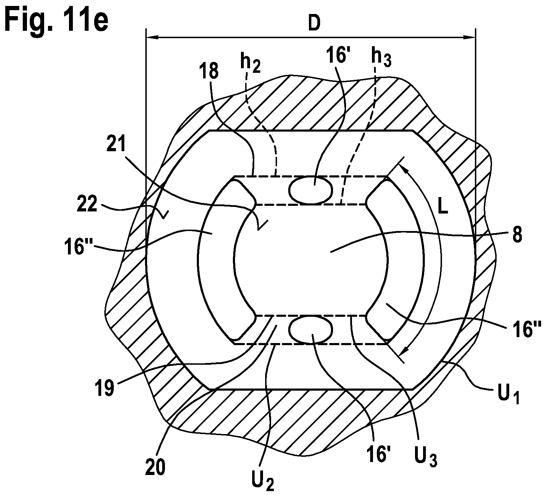

- Fig.11: in den Figuren 11a bis 11e zur Erläuterung eines Formpins zur Erzeugung eines Spikelochs mit weiterem alternativ ausgebildetem Spikelochgrund, wobei
- Fig.11c: analog zur Darstellung der Fig.4b den Formpin in Draufsicht,
- Fig.11a: den Formpin in Seitenansicht gemäß Ansicht XIa-XIa von Fig.11c,
- Fig.11b: den Formpin in Seitenansicht gemäß Ansicht XIb-XIb von Fig.11c,
- Fig.11d: den Formpin in perspektivischer Darstellung und
- Fig.11e: den durch den Formpin erzeugten Spikelochgrund - analog zur Darstellung der Fig.4e - zeigt,

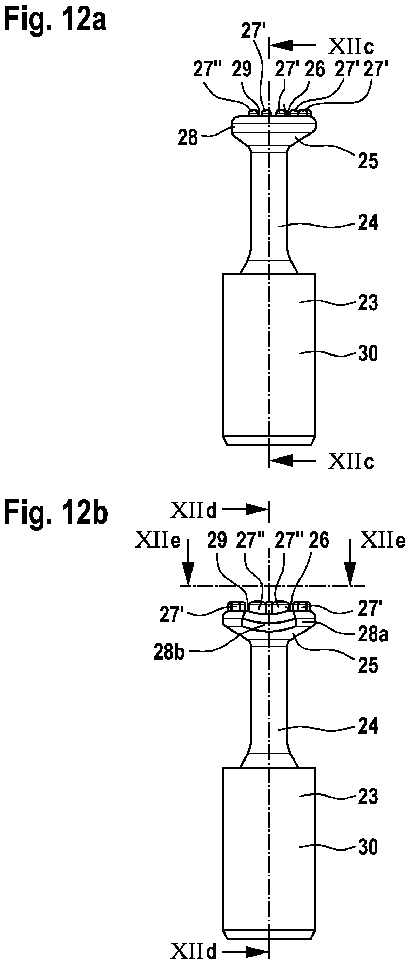

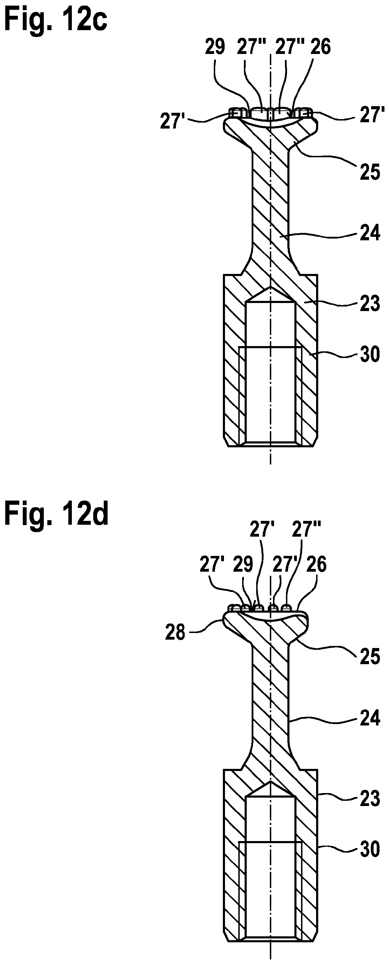

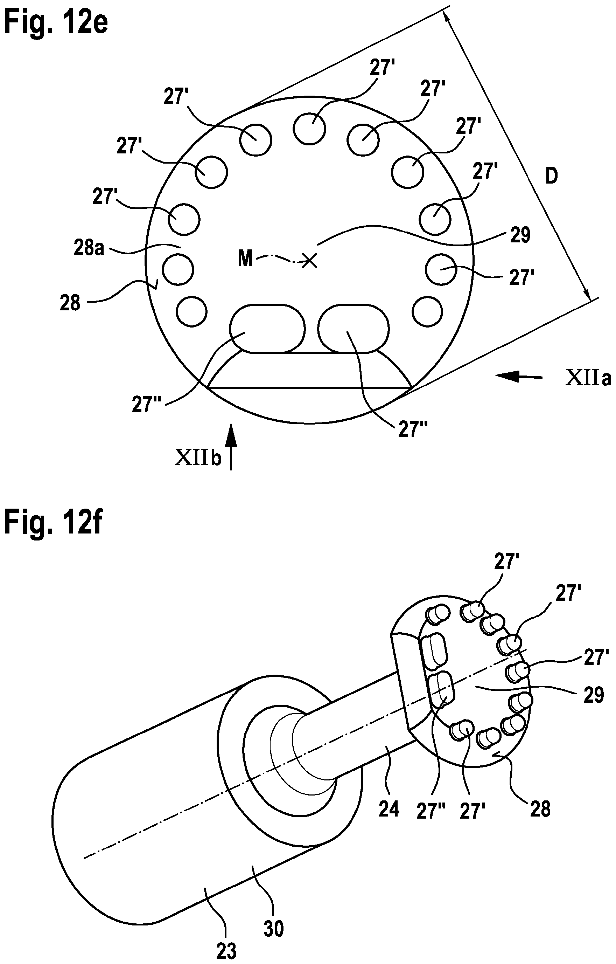

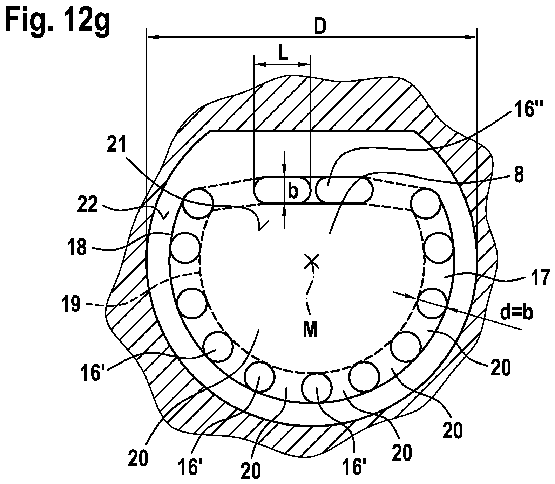

- Fig. 12: in den Figuren 12a bis 12g zur Erläuterung eines Formpins zur Erzeugung eines Spikelochs mit weiterem alternativ ausgebildetem Spikelochgrund, wobei
- Fig.12e: analog zur Darstellung der Fig.4b den Formpin in Draufsicht auf die Formfläche zur Ausbildung des Spikelochgrunds,
- Fig.12a: den Formpin in Seitenansicht gemäß Ansicht XIIa-XIIa von Fig.12e,
- Fig.12b: den Formpin in Seitenansicht gemäß Ansicht XIIb-XIIb von Fig.12e,
- Fig.12c: den Formpin in Schnittdarstellung gemäß Schnitt XIIc-XIIc von Fig.12a,
- Fig.12d: den Formpin in Schnittdarstellung gemäß Schnitt XIId-XIId von Fig.12b,
- Fig.12f: den Formpin in perspektivischer Darstellung und
- Fig.12g: den durch den Formpin erzeugten Spikelochgrund - analog zur Darstellung der Fig.4e - zeigt, und

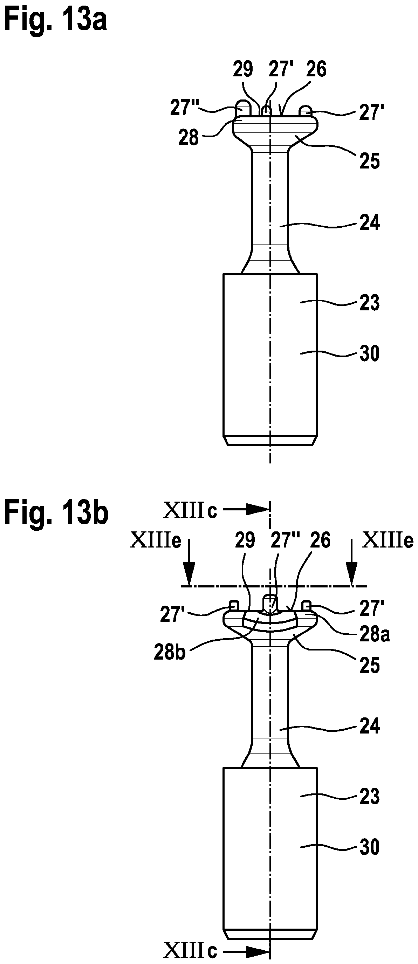

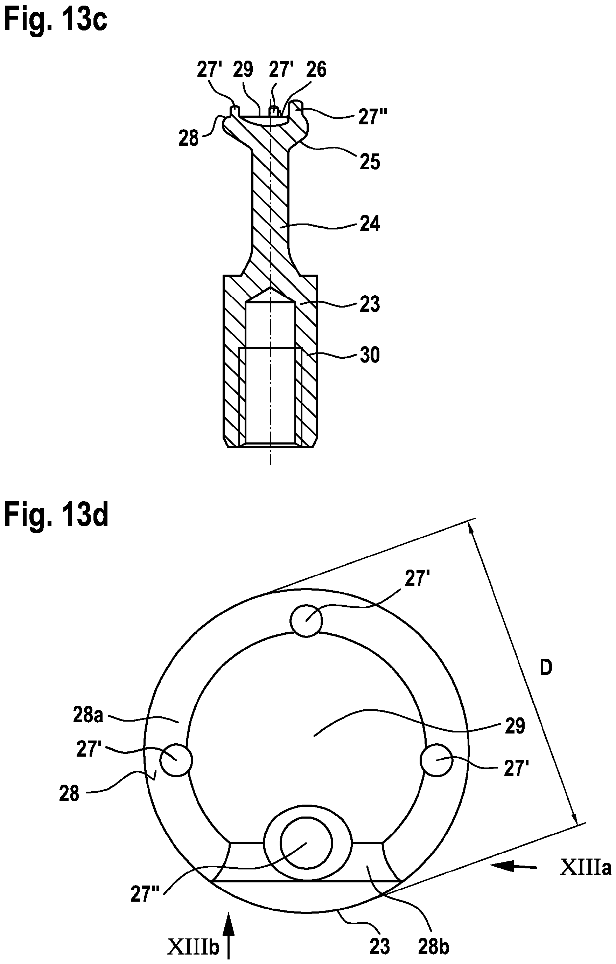

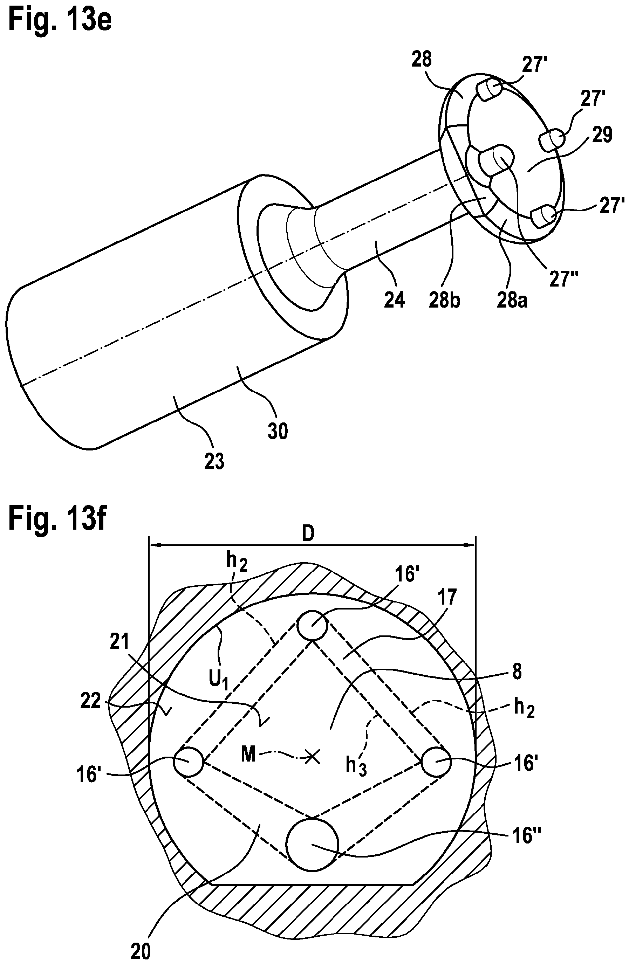

- Fig.13: in den Figuren 13a bis 13e zur Erläuterung eines Formpins zur Erzeugung eines Spikelochs mit weiterem alternativ ausgebildeten Spikelochgrund, wobei
- Fig.13d: analog zur Darstellung der Fig.4b den Formpin in Draufsicht auf die Formfläche zur Ausbildung des Spikelochgrunds,
- Fig.13a: den Formpin in Seitenansicht gemäß Ansicht XIIIa-XIIIa von Fig.13d,
- Fig.13b: den Formpin in Seitenansicht gemäß Ansicht XIIIb-XIIIb von Fig.13d,
- Fig.13c: den Formpin in Schnittdarstellung gemäß Schnitt XIIIc-XIIIc von Fig.13d,
- Fig.13e: den Formpin in perspektivischer Darstellung und
- Fig.13f: den durch den Formpin im Spikeloch erzeugten Spikelochgrund - analog zur Darstellung der Fig.4e - zeigt.

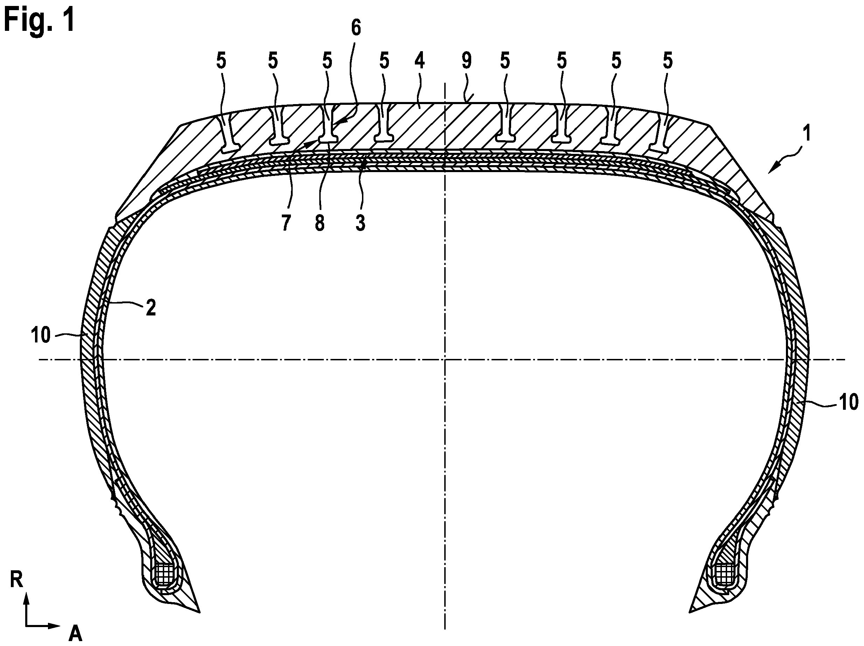

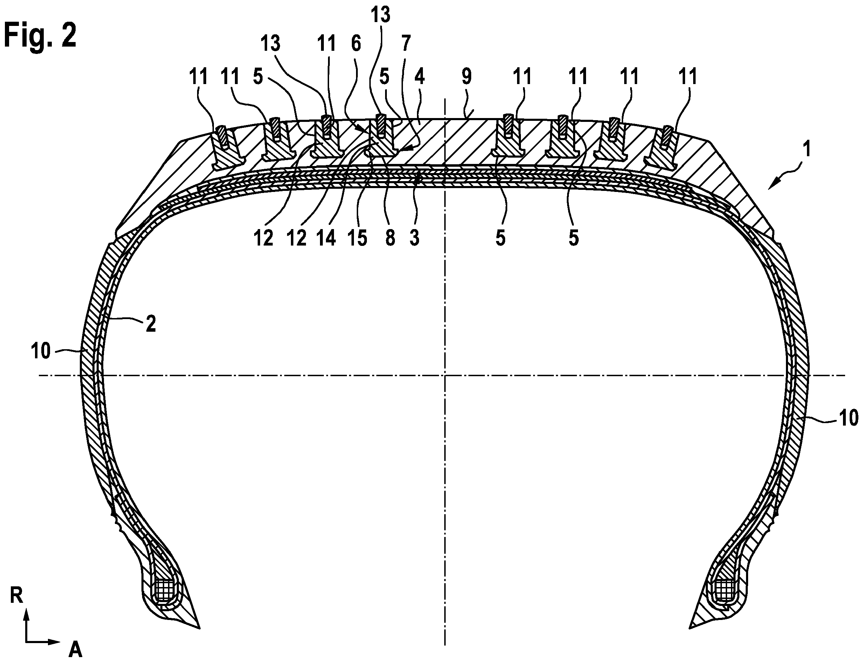

Die Figuren 1 und 2 zeigen einen Fahrzeugluftreifen 1 eines Personenkraftwagens (Pkw) mit Wintereigenschaften für den Einsatz mit Spikes. Der Fahrzeugluftreifen 1 ist dabei in herkömmlicher Weise mit zwei den Fahrzeugluftreifens in axialer Richtung A begrenzenden Seitenwänden 10 und mit einem den Fahrzeugreifen in radialer Richtung R nach außen hin begrenzenden profilierten Laufstreifen 9 ausgebildet. Die Profilierung des Laufstreifens ist der Einfachheit halber nicht dargestellt. Wie in Fig.1 zu erkennen ist, ist der Reifen herkömmlicher Weise mit einer Karkasse 2 radialer Bauart ausgebildet, welche sich ausgehend von dem Wulstkern der links dargestellten Seitenwand 10 in radialer Richtung R nach außen hin, dann in axialer Richtung durch den gesamten axialen Erstreckungsbereich des Reifens bis zur rechts dargestellten Seitenwand 10 und im Anschluss daran in radialer Richtung nach innen durch die rechts dargestellte Seitenwand 10 bis zu dem Wulstkern der rechten Seitenwand erstreckt. Radial unterhalb des Laufstreifens ist in bekannter Weise ein ein- oder mehrlagiger Gürtel 3 auf der Karkasse 2 ausgebildet, welcher sich in axialer Richtung von der linken Reifenschulter bis zur rechten Reifenschulter und in Umfangsrichtung über den gesamten Reifen erstreckt. Radial außerhalb des Reifengürtels ist der Laufstreifen 9 in bekannter Weise aus Laufstreifengummimaterial aufgebaut, welches sich über den gesamten Umfang des Fahrzeugluftreifens und in axialer Richtung von der linken Reifenschulter bis zur rechten Reifenschulter erstreckt. Der Laufstreifen 9 ist dabei beispielsweise in bekannter Weise aus einer radial inneren Base-Schicht und aus radial einer äußeren Cap-Schicht ausgebildet. Im Laufstreifen 9 sind über den gesamten Umfang des Reifens hinweg und - wie in Fig. 1 dargestellt ist - in axialer Richtung A über die axiale Erstreckung A des Laufstreifens verteilt angeordnet jeweils in bekannter Weise Spikelöcher 5 ausgebildet.

Die Spikelöcher 5 erstrecken sich dabei jeweils von der den Laufstreifen nach radial nach außen hin begrenzenden Oberfläche des Laufstreifens ausgehend in radialer Richtung R des Reifens nach innen hin mit einem radial äußeren Erstreckungsabschnitt 6 und einem radial anschließend angeordneten radial inneren Erstreckungsabschnitt 7. Im radial äußeren Erstreckungsabschnitt 6 ist das Spikeloch 5 jeweils zylindrisch ausgebildet. Im radial inneren Erstreckungsabschnitt 7 ist das Spikeloch 5 jeweils ebenfalls zylindrisch ausgebildet. Die Zylinderform im radial inneren Erstreckungsabschnitt 7 und im radial äußeren Erstreckungsabschnitt 6 sind konzentrisch zueinander ausgebildet, wobei die Zylinderform im radial inneren Erstreckungsabschnitt 7 einen größeren Zylinderdurchmesser aufweist als die Zylinderform im radial äußeren Erstreckungsabschnitt 6. Das Spikeloch 5 ist im radial inneren Erstreckungsabschnitt 7 nach radial innen hin jeweils von einem Spikelochgrund 8 begrenzt ist. Dies ist in den Figuren 1, 2, 3c, 3a, 3b und 3d zu erkennen.

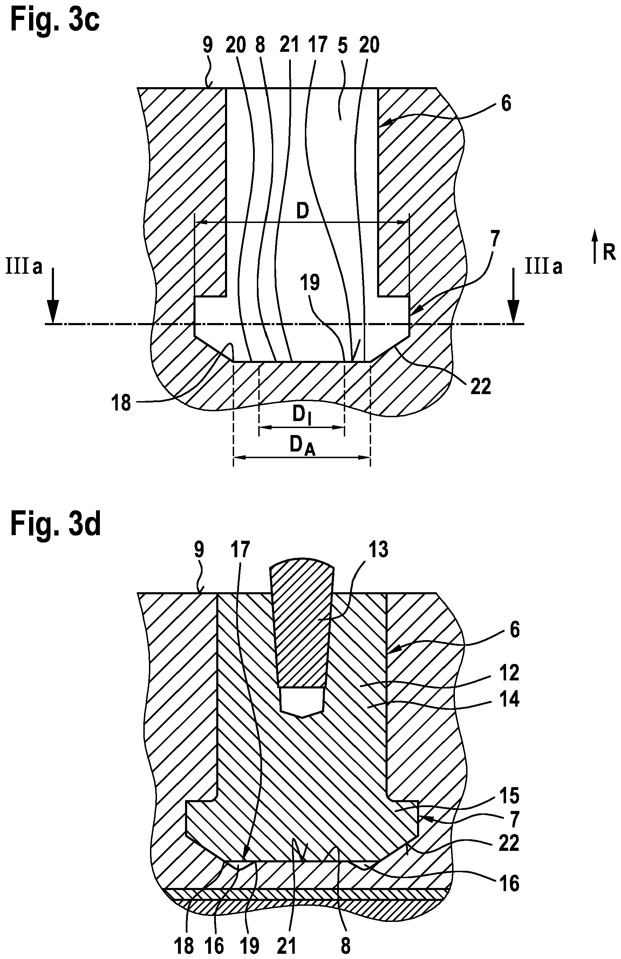

In den Fig.2 sowie die Fig.3d ist der Fahrzeugluftreifen von Fig.1 dargestellt, bei dem bereits jeweils ein Spike 11 in bekannter Weise in ein korrespondierend ausgebildetes Spikeloch 5 eingepresst ist.

Der Spike 11 ist in bekannter Weise aus einem Spikekörper 12 und einem Spikepin 13 ausgebildet. Der Spikekörper 12 ist längs seiner Erstreckung in Spikeachsenrichtung mit einem oberen Spikekörperabschnitt 14 und mit einem daran anschließenden Fußflansch 15, der den unteren Abschnitt bildet, ausgebildet. Der Spikekörperabschnitt 14 ist mit einer im Wesentlichen zylindrischen Mantelfläche ausgebildet. Der Fußflansch 15 ist mit einer konzentrisch zur zylindrischen Mantelfläche des Spikekörperabschnitts 14 angeordneten zylindrischen Mantelfläche ausgebildet, deren Durchmesser größer ist, als der Durchmesser der zylindrischen Mantelfläche des Spikekörperabschnitts 14. Im Reifen ist der Spikekörperabschnitt 14 in radialer Richtung des Reifens außerhalb des Fußflansches 15 angeordnet. Der Spikekörper 12 ist in axialer Erstreckungsrichtung des Spikes nach unten, d.h. in radialer Richtung R des Reifens nach innen hin von einer Stirnfläche begrenzt, welche im eingesetzten Zustand im Spikeloch 5 in Berührkontakt zum Spikelochgrund 8 steht.

Wie in den Figuren 2 und 3d zu erkennen ist, ist der Spikekörper 12 auf seiner vom Spikegrund 8 wegweisenden Seite mit einer Öffnung zur Aufnahme des Spikepins 13 ausgebildet, in welcher der Spikepin 13 in herkömmlicher Weise positioniert und befestigt ist. Wie in Fig.3d und Fig.2 zu erkennen ist, ist der Laufstreifen 4 in radialer Richtung nach außen hin von einer radial äußeren, die Bodenkontaktfläche bildenden Oberfläche 9 begrenzt, welche in der Position des Spikelochs 5 bei eingesetztem Spike 11 im Wesentlichen fließend in die vom Spikelochgrund 8 wegweisende Stirnfläche des Spikekörpers 12 übergeht. Der Spikepin 13 erstreckt sich in bekannter Weise in radialer Richtung R des Reifens nach außen über die Position der radial äußeren Oberfläche 9 hinaus.

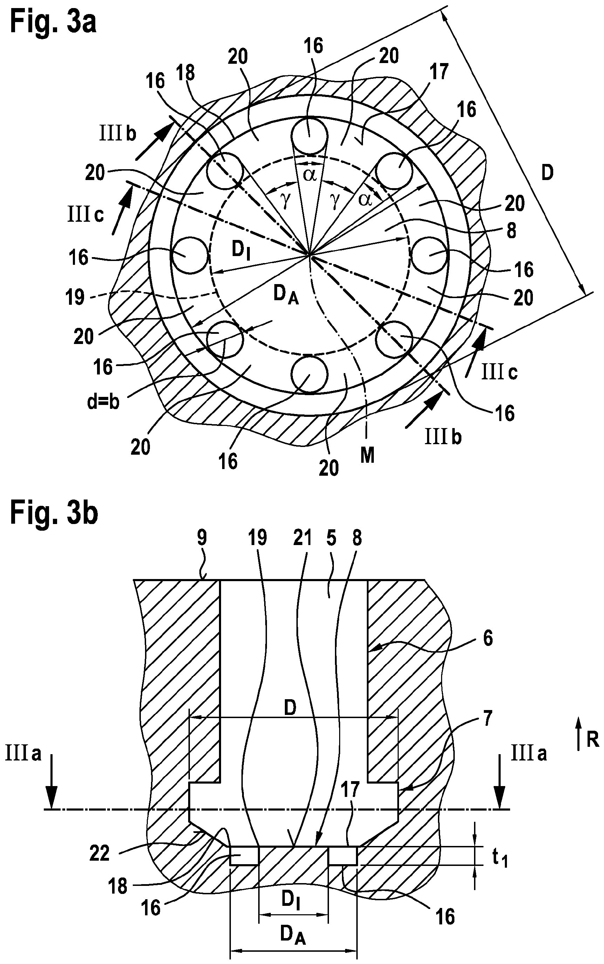

Wie in den Figuren 3a bis 3d zu erkennen ist, ist im Spikelochgrund 8 eine kreisringförmige Fläche 17 ausgebildet, welche zwischen einer die kreisringförmige Fläche 17 nach außen hin begrenzenden, geschlossenen Außenlinie 18 und einer die kreisringförmige Fläche 17 nach innen hin begrenzenden, geschlossenen Innenlinie 19 gebildet ist. Über den Umfang des Rings sind gleichmäßig verteilt Vertiefungen 16 im Spikelochgrund 8 ausgebildet. Der Mittelpunkt M des Rings liegt auf der Achse des radial äußeren Lochabschnitts 6 des Spikelochs 5. Die Außenlinie 18 und die Innenlinie 19 des Rings sind im dargestellten Ausführungsbeispiel konzentrische Kreise mit dem im Spikelochgrund 8 angeordneten Kreismittelpunkt M. Die Innenlinie 19 ist mit einem Durchmesser D_{I} und die Außenlinie 18 mit einem Durchmesser D_{A} mit D_{A} > D_{I} mit (D_{A}-D_{I}) = b ausgebildet.

Die Vertiefungen 16 sind längs der Umfangserstreckung der kreisringförmigen Fläche 17 über den Umfang des Rings gleichmäßig hintereinander verteilt angeordnet. Die Vertiefungen 16 bilden im Spikelochgrund 8 jeweils eine kreisförmige Lochkontur mit einem Durchmesser d mit d = b. Die Vertiefungen 16 sind in dieser Ausführung somit mit einer in Richtung der Umfangserstreckung des Rings ausgebildete Erstreckungslänge ausgebildet, die dem Durchmesser d entspricht, und mit einer senkrecht zur Richtung der Umfangserstreckung des Rings ausgebildeten Breite b, welcher der Breite b der ringförmigen Fläche entspricht. Die Vertiefungen 16 sind jeweils beabstandet voneinander ausgebildet und längs der Umfangserstreckung des Rings mit einem Umfangserstreckungswinkel α mit 5° ≤ α ≤ 120° um den Mittelpunkt M erstreckt ausgebildet und mit einem Umfangserstreckungswinkel γ mit 5°≤γ≤80° um den Mittelpunkt M voneinander beabstandet positioniert. Der Abstand von zwei benachbarten Vertiefungen 16 ist dabei jeweils mit 0,2mm bis 2mm ausgebildet.

Die Durchmesser d der Vertiefungen sind mit 0,2mm≤ d ≤ 1,5mm ausgebildet.

Die Vertiefungen sind mit einer vom Spikelochgrund 8 senkrecht zum Spikelochgrund 8 gemessenen Tiefe t₁ mit 0,2mm ≤ t₁ ≤ 2mm ausgebildet. In den Spikelöchern 5 üblicher Spikereifen ist die Tiefe t₁ dabei sinnvollerweise mit 0,3mm ≤ t₁ ≤ 1mm - beispielsweise mit t₁ = 0,5mm - ausgebildet.

Die in radialer Richtung R des Reifens zwischen radial äußerer Oberfläche 9 und Spikelochgrund 8 gemessene Tiefe der Spikelochlöcher 5 ist in üblicher Weise im Bereich zwischen 7mm und 15mm ausgebildet.

Im dargestellten Ausführungsbeispiel von Fig.3a ist α=15° und γ =30° gewählt.

Wie in Fig.3d und in Fig.2 zu erkennen ist, ist das Spikeloch 5 nach Einpressen des Spikes 11 in das Spikeloch 5 aufgrund der etwas größeren Außendurchmesser des Spikes 11 gegenüber den hergestellten Lochdurchmessern des Spikelochs 5 längs seiner Erstreckung zwischen radial äußerer Oberfläche 9 und Spikelochgrund 8 in seinem Umfang auf die Außendurchmesser des Spikes 11 geweitet, so dass der Spike 11an seinen Zylindermantelflächen vom umgebenden Gummimaterial des Laufstreifens unter Spannung umschlossen ist und aufgrund des größeren Durchmessers des Spikefußes 15 gegenüber dem Durchmesser des oberen Erstreckungsabschnitts 14 des Spikekörpers 12 auch formschlüssig im Spikeloch 5 sitzt.

Bei zusätzlicher Belastung des Spikes 11 beim Abrollen des Reifens auf der Straße kann Gummimaterial des besonders belasteten Abschnitts im Spikelochgrund 8 in die dem belasteten Abschnitt nächstgelegenen Vertiefungen 16 eindringen und hierdurch Belastungen dämpfend aufnehmen. Der zwischen zwei benachbarten Vertiefungen 16 in der ringförmigen Fläche 17 ausgebildete Abschnitt bildet jeweils einen Steg 20 und somit eine steife Anbindung zwischen dem außerhalb der Außenlinie 18 und dem innerhalb der Innenlinie 19 ausgebildeten Gummimaterials des Spikelochgrunds 8.Trotz Dämpfung können auf den Spikeboden einwirkende Kräfte und Momente übertragen werden können.

Wie in Fig. 3a, 3b und 3c ist eine Ausführungsbeispiel zu erkennen, bei dem der Spikelochgrund 8 außerhalb der Außenlinie 18 konzentrisch zum Mittelpunkt M konisch ausgebildet. Der Spikelochgrund 8 hebt sich somit ausgehend von der Linie 18 bis zur zylindrischen Mantelfläche des Durchmessers D in radialer Richtung R des Reifens kontinuierlich an.

Im dargestellten Ausführungsbeispiel der Figuren 3a bis 3d sind über den Umfang der ringförmigen Fläche 17 verteilt 8 Vertiefungen 16 ausgebildet.

Die Figuren 4a bis 4c zeigen einen Formpin 23, der zur Herstellung dieses in den Figuren 3a bis 3d dargestellten Spikeloches 5 in der Reifenvulkanisationsmulde eingesetzt wird. In bekannter Weise ist der Formpin 23 dabei im Wesentlichen aus drei längs der Erstreckungsachse des Formpin 23 ausgebildeten Abschnitten mit einem unterem Formabschnitt 25, einem daran anschließendem oberen Formabschnitt 24 und mit einem Befestigungsabschnitt 30 ausgebildet. Der obere Formabschnitt 24 entspricht mit seiner Mantelfläche dem Negativ der auszuformenden Innenkontur des radial äußeren Erstreckungsabschnitts 6 des Spikelochs 5. Der untere Formabschnitt 25 entspricht mit seiner Mantelfläche dem Negativ der auszuformenden Innenkontur des radial inneren Erstreckungsabschnitts 7 des Spikelochs 5 und ist an seiner vom oberen Formabschnitt 24 wegweisenden Stirnfläche 26 als Negativ zur Ausformung des Spikelochgrundes 8 ausgebildet. Wie in Fig.4a zu erkennen ist, sind dabei zur Erzeugung der Vertiefungen 16 konzentrisch ringförmig gleichmäßig verteilt 8 zylindrische oder leicht konische Pins 27, welche sich parallel zur Erstreckungsrichtung des Formpins 24 aus der Stirnfläche 26 erstrecken, ausgebildet. Die Pins 27 erstrecken sich dabei aus der Stirnfläche 26 bis in eine eine Höhe, welche der auszuformenden Tiefe t₁ der Vertiefungen 16 entspricht.

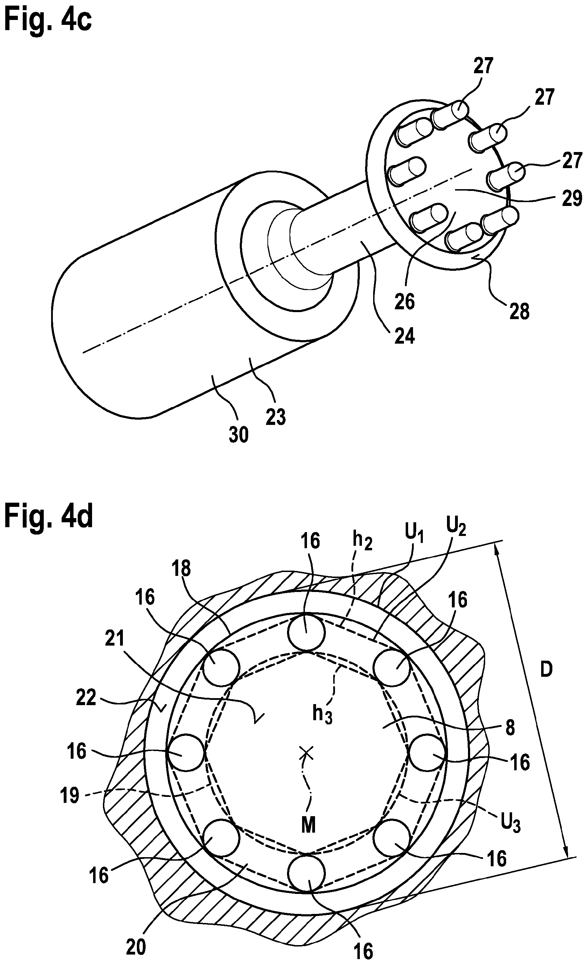

In Fig.4d ist noch einmal - wie in Fig.3a - der Spikelochgrunds 8 dargestellt, der durch den Einsatz des in den Figuren 4a bis 4c dargestellten Formpins 23 im Spikeloch 5 erzeugt wird.

Wie zu erkennen ist, ist der in den Figuren 4a bis 4c dargestellte Formpin 23 mit acht Pins 27 zur Ausformung der in Fig. 4d und 3a dargestellten acht Vertiefungen 16 ausgebildet.

Außerhalb des Ringes, in dem die Pins 27 in der Stirnfläche 26 angeordnet sind, ist - wie in Fig. 4a und 4b dargestellt ist - die Stirnfläche 26 zur Erzeugung des Spikelochgrundes 8 als konische Fläche 28 ausgebildet. Innerhalb des Ringes ist die Stirnfläche 26 in diesem Ausführungsbeispiel als ebene Fläche ausgebildet. Wie in den Figuren 4a und 4c zu erkennen ist, ist der Formpin 23 an dem vom unteren Formabschnitt 25 wegweisenden Erstreckungsende des oberen Formabschnitts 24 mit einem zylindrischen Befestigungsabschnitt 30 ausgebildet, mit welchem der Formpin 24 in bekannter Weise in der Reifenvulkanisationsform befestigt wird.

In Fig.4d ist ein Außenumfang U₂ eingetragen, der die Länge der kürzesten Hülllinie h₂ angibt, welche alle Vertiefungen 16 jeweils an deren vom Mittelpunkt M wegweisenden Außenseite auf der Außenlinie 18 tangential berührt. Ebenso ist ein Innenumfang U₃ eingetragen, der die Länge der kürzesten Hülllinie h₃ angibt, welche alle Vertiefungen 16 jeweils an deren zum Mittelpunkt M hinweisenden Innenseite auf der Innenlinie 19 tangential berührt. Die Umfangslängen U₂ und U₃ sind beispielsweise mit U₂ = 14,9mm und U₃= 11,1mm ausgebildet. Die Gesamtumfangslänge U₁ des Spikelochgrundes 8 ist beispielsweise mit U₁ = 18,3mm ausgebildet.

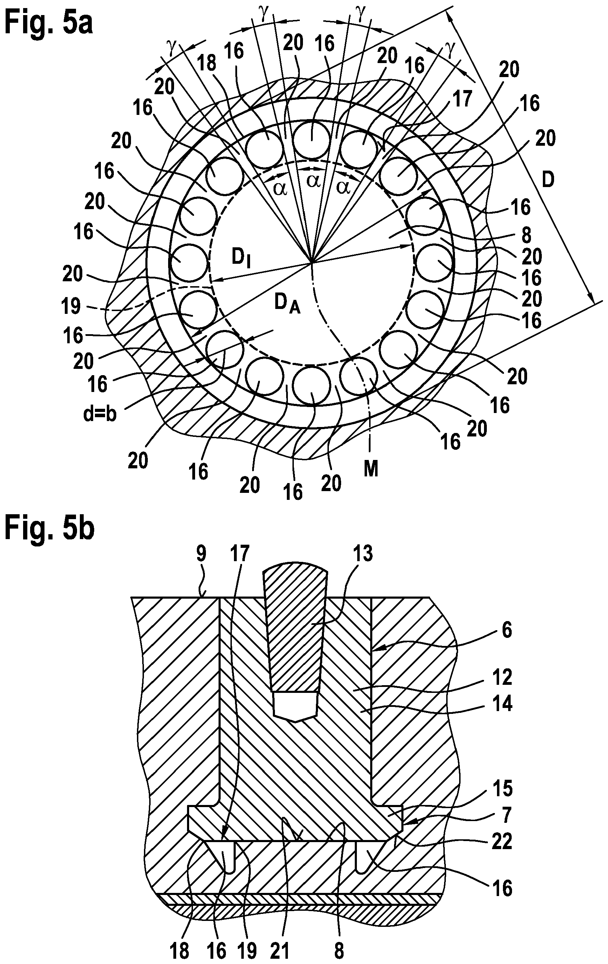

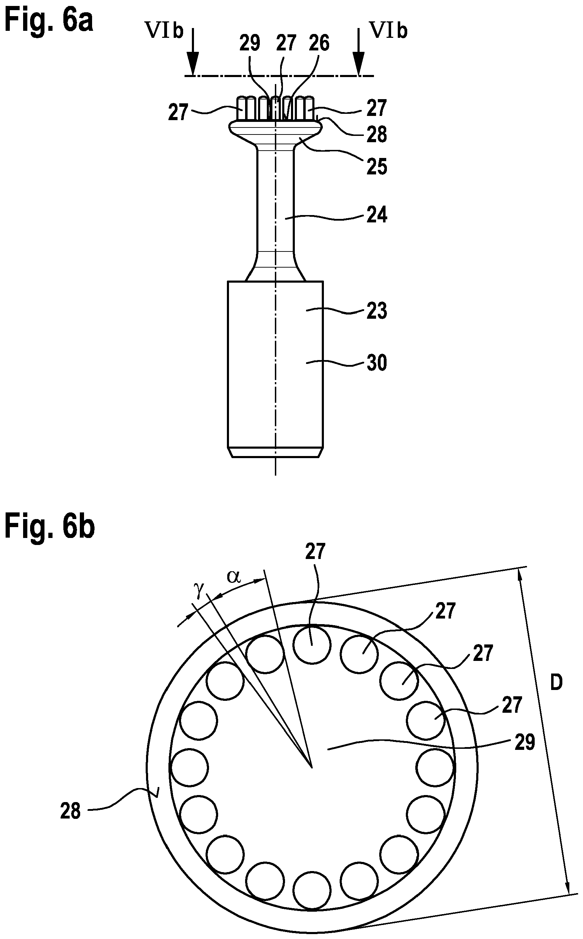

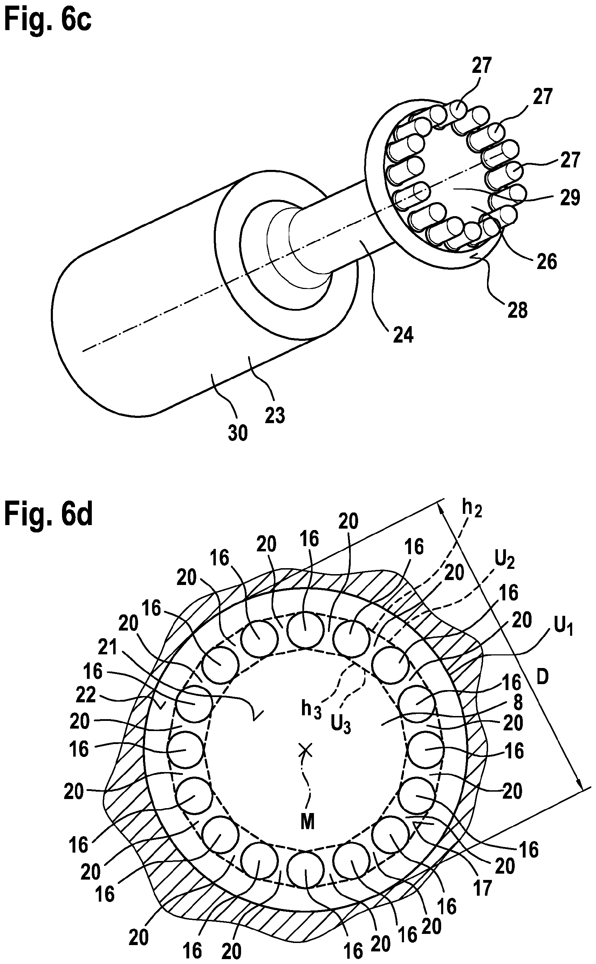

Die Figuren 5a und 5b zeigen eine alternative Ausbildung des Spikelochgrundes 8, bei der über den Umfang der ringförmigen Fläche 17 gleichmäßig verteilt 16 Vertiefungen 16 ausgebildet sind. Wie in den Figuren 6a bis 6c dargestellt ist, ist der Formpin 23 zur Erzeugung dieses Spikelochgrunds 8 dementsprechend mit 16 Pins 27 ausgebildet. Wie Fig.6d und Fig.5a zu entnehmen ist, wird hierdurch eine hohe Dichte an Vertiefungen 16 in der ringförmigen Fläche 17 ermöglicht und die Umfangslinien U₂ und U₃ sind nahezu kreisförmig. Die Umfangslinie U₃ entspricht hier nahezu der Innenlinie 19 und die Umfangslinie U₂ entspricht nahezu der Außenlinie 18 der ringförmigen Fläche 17. Zur Erzielung einer besseren Übersichtlichkeit sind in Fig. 6d die Innenlinie 19 und die Außenlinie 18 nicht dargestellt.

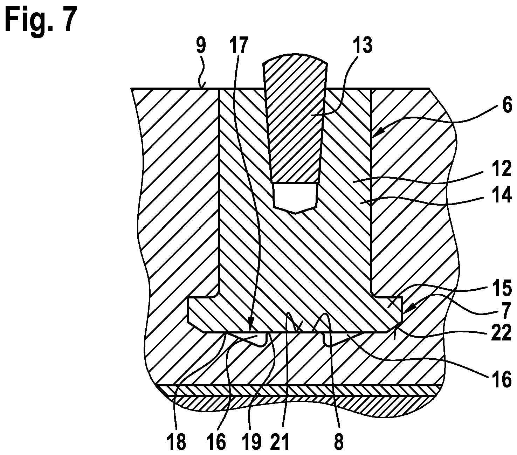

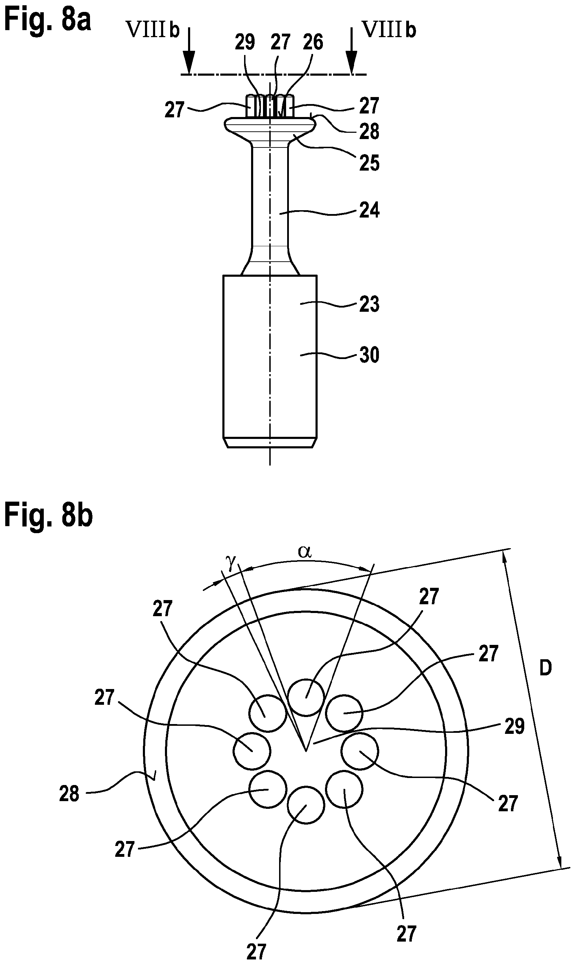

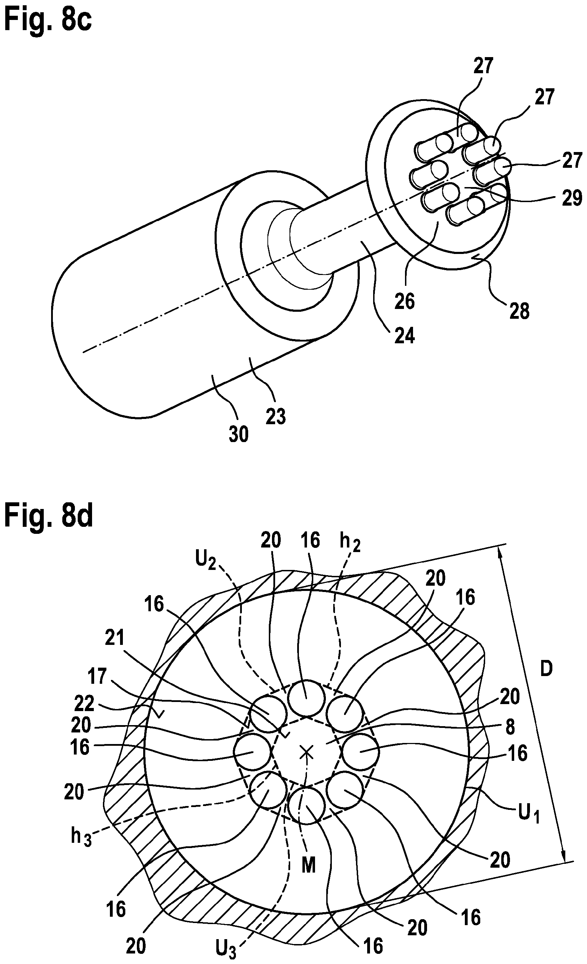

Die Figuren 7 und 8d zeigen ein anderes Ausführungsbeispiel des Spikelochgrundes 8, bei dem zwar wie in den Figuren 3 und 4 lediglich 8 Vertiefungen 16 mit - wie in den Figuren 8a bis 8c dargestellt ist - 8 entsprechend ausgebildeten Pins 27 des Formpins 23 hergestellt werden. Zur Erzielung einer besseren Übersichtlichkeit sind in Fig.8d die Innenlinie 19 und die Außenlinie 18 nicht dargestellt. Bei diesem Ausführungsbeispiel sind die Außenlinie 18 und die Innenlinie 19 mit deutlich kleinerem Durchmesser ausgebildet als bei dem in den Figuren 3 und 4 dargestellten Ausführungsbeispiel. Bei diesem Ausführungsbeispiel ist somit innerhalb der ringförmigen Fläche 17 ebenfalls eine hohe Dichte an Vertiefungen 16 umgesetzt, allerdings mit größerem Abstand zum äußeren Rand des Spikelochgrundes 8.

In Fig.9e ist ein weiteres Ausführungsbeispiel eines Spikelochgrundes 8 und in den Figuren 9a bis 9d der zur Ausformung des Spikelochgrundes 8 von Fig.9e entsprechend ausgebildete Formpin 23 dargestellt. Der Formpin 23 ist an seiner Stirnfläche 26 im Erstreckungsbereich des radial äußeren Abschnitts 28 mit in alternierender Abfolge hintereinander angeordnete Umfangserstreckungsabschnitten 28a und mit Umfangserstreckungsabschnitten 28b ausgebildet. Die Umfangserstreckungsabschnitte 28a sind analog zu den in den Figuren 3 und 4 dargestellten Ausführungsbeispielen konisch, konzentrisch zur Formpinachse ausgebildet. Die Umfangserstreckungsabschnitte 28b sind lediglich abgeschrägte, geradlinige Verbindungsabschnitte zwischen den benachbarten Umfangserstreckungsabschnitten 28a. Hierdurch wird - wie in Fig.9e zu erkennen ist - der Spikelochgrund 8 mit in alternierender Abfolge hintereinander angeordneten Umfangserstreckungsabschnitten 22a und Umfangserstreckungsabschnitten 22b ausgebildet, wobei die Umfangserstreckungsabschnitte 22a - erzeugt durch die Umfangserstreckungsabschnitte 28a des Formpins 23 - analog zur Ausbildung des radial äußeren Abschnitts der Figuren 3 und 4 konisch und konzentrisch zur Spikelochachse und die Umfangserstreckungsabschnitt 22b -erzeugt durch durch die Umfangserstreckungsabschnitte 28b des Formpins 23 - lediglich geneigte und die beiden benachbarten Umfangserstreckungsabschnitte 22a im Wesentlichen geradlinig verbindende Abschnitte sind. Im Ausführungsbeispiel der Figuren 9 sind dabei zwei im Spikelochgrund 8 über den Mittelpunkt M gespiegelt gegenüberliegende Umfangserstreckungsabschnitte 22b ausgebildet.

Fig.10 a bis d zeigt ein Ausführungsbeispiel mit lediglich einem derartigen Umfangserstreckungsabschnitt 28b, welcher - wie in Fig.10d zu erkennen ist - lediglich einen Umfangserstreckungsabschnitt 22b erzeugt.

In den Fig. 10a bis Fig.10d ist ein weiteres Ausführungsbeispiel dargestellt, bei welchem in der ringförmigen Fläche 17 des Spikelochbodens 8 drei Vertiefungen 16' durch drei im Formpin 23 entsprechend ausgebildete Pins 27' und eine Vertiefung 16" durch einen im Formpin 23 entsprechend ausgebildeten Pin 27" ausgeformt werden. Die Pins 27" sind dabei mit größerem Außendurchmesser als die Pins 27' und mit größerer Erstreckungshöhe als die Pins 27' ausgebildet. Hierdurch sind die Vertiefungen 16' mit geringerer Tiefe t₁ und mit geringerem Außendurchmesser ausgebildet als die Vertiefungen 16".

In Fig.11a bis Fig.11e ist ein Ausführungsbeispiel dargestellt, bei welchem die ringförmige Fläche 17 des Spikelochgrunds 8 mit ihrer Außenlinie 18 und mit ihrer Innenlinie 19 keinen kreisförmigen Ring, sondern einen etwas abgeflacht ovalen oder elliptischen Ring bilden. Bei dem dargestellten Ausführungsbeispiel bildet die Außenlinie 18 die Hüllkurve h₂ und die Innenlinie 19 die Hüllkurve h₃.

Die Figuren 11a bis 11e zeigen darüber hinaus ein Ausführungsbeispiel, bei dem Vertiefungen 16' bzw. 16" im Spikelochgrund 8 nicht mit kreisförmiger, sondern mit langlochförmiger Kontur ringsegmentförmig ausgebildet sind mit einer in Erstreckungsrichtung der ringförmigen Fläche 17 ausgebildeter Längenerstreckung L, welche deutlich größer ist als die senkrecht zur Umfangserstreckung der ringförmigen Fläche ausgebildete Breite b.

Darüber hinaus zeigen die Figuren 11a bis 11e ein weiteres Ausführungsbeispiel, bei welcher erste Vertiefungen 16' durch erste entsprechend ausgeformte Pins 27' und zweite Vertiefungen 16" durch zweite entsprechend ausgeformte Pins 27" erzeugt werden, wobei die Vertiefungen 16" eine in Umfangserstreckungsrichtung der ringförmigen Fläche 17 deutlich größere Längenerstreckung L aufweisen als die Vertiefungen 16' und in analoger Weise auch die Pins 27" eine entsprechend größere Erstreckungslänge aufweisen als die Pins 27'.

Im Ausführungsbeispiel der Figuren 11a bis 11e sind dabei jeweils zwei Vertiefungen 16' und zwei Vertiefungen 16" in alternierender Abfolge ausgebildet, wobei die Vertiefungen 16' jeweils durch eine Vertiefung 16" voneinander getrennt sind.

In den Figuren 12a bis 12e ist ein weiteres Ausführungsbeispiel dargestellt, bei welchem analog zu den in den Figuren 10a bis 10d dargestellten Ausbildungen der radial äußere Abschnitt 28 mit einem Umfangserstreckungsabschnitt 28a und einem abgeflachten Umfangserstreckungsabschnitt 28b ausgebildet ist. Dabei sind längs der Umfangserstreckung des Umfangserstreckungsabschnitts 28a in der ringförmigen Fläche 17 erste Pins 27'zur Ausformung erster Vertiefungen 16' und längs der Umfangserstreckung des Umfangserstreckungsabschnitt 28b zweite Pins 27" zur Ausformung zweiter Vertiefungen 16" im Spikelochgrund 8 ausgebildet. Die ringförmige Fläche 17 ist dabei längs der Erstreckung des Umfangserstreckungsabschnitts 28a mit ihrer Außenlinie 18 und mit ihrer Innenlinie 19 im Wesentlichen als konzentrische Ringsegmentfläche ausgebildet und im Umfangserstreckungsabschnitt 28b als geradlinig erstreckter Ringsegmentfläche ausgebildet. Die Vertiefungen 16" sind dabei - wie bei den Darstellungen in den Figuren 11a bis 11e - längs der Umfangserstreckungsrichtung der ringförmigen Fläche 17 erstreckte langlochförmige Vertiefungen 16" mit einer Erstreckungslänge L, die größer ist als die Breite b. Die Vertiefungen 16' sind hingegen in Spikelochgrund 8 kreisförmig mit einem Durchmesser d = b ausgebildet.

In den Figuren 13a bis 13e ist ein weiteres Ausführungsbeispiel dargestellt, das wie das in den Figuren 12a bis 12f dargestellten Ausführungsbeispiel ausgebildet ist, wobei jedoch die ringförmige Fläche 17 lediglich mit drei Vertiefungen 16' im Erstreckungsbereich der ringförmige Fläche 17 längs der Erstreckung des radial äußeren Umfangserstreckungsabschnitts 28a und mit lediglich einer Vertiefung 16" im Umfangserstreckungsabschnitt 28b ausgebildet ist, wobei die Vertiefung 16" tiefer und mit größerem Durchmesser ausgebildet ist als die Vertiefungen 16'. Zur Erzielung einer besseren Übersichtlichkeit sind in Fig.13f die Innenlinie 19 und die Außenlinie 18 nicht dargestellt.

Der Innenumfang U₃ der mit Vertiefungen 16 ausgebildeten ringförmigen Flächen ist mit (0,15U₁)≤ U₃ ≤(0,90 U₁) ausgebildet. In der Ausbildung bei üblichen Spikereifen ist der Innenumfang U₃ jedoch - wie bei den oben dargestellten und beschriebenen Ausführungsbeispielen- sinnvollerweise mit (0,4U₁)≤ U₃ ≤(0,65 U₁) gewählt ausgebildet.

### Bezugszeichenliste

### (Teil der Beschreibung)

- 1: Fahrzeugreifen
- 2: Karkasse
- 3: Gürtel
- 4: Laufstreifen
- 5: Spikeloch
- 6: Radial äußerer Lochabschnitt
- 7: Radial innerer Lochabschnitt
- 8: Spikelochgrund
- 9: Radial äußere Oberfläche
- 10: Reifenseitenwand
- 11: Spike
- 12: Spikeköper
- 13: Spikepin
- 14: Oberer Abschnitt
- 15: Fußflansch
- 16: Vertiefung
- 17: Ringförmige Fläche
- 18: Außenlinie
- 19: Innenlinie
- 20: Steg
- 21: Innenfläche
- 22: Außenfläche
- 23: Formpin
- 24: Oberer Formabschnitt
- 25: Unterer Formabschnitt
- 26: Stirnfläche
- 27: Pin
- 28: Radial äußerer Abschnitt
- 29: Radial innerer Abschnitt
- 30: Befestigungsabschnitt

## Patentansprüche

1. Fahrzeugreifen mit Laufstreifenprofil und Spikelöchern (5) zur Aufnahme von Spikes (11), welche in radialer Richtung R **des Fahrzeugreifens** nach innen hin jeweils von einem Lochgrund (8) begrenzt werden,
**dadurch gekennzeichnet, dass** auf einer ringförmigen Fläche (17) des Lochgrunds (8) mehrere, jeweils voneinander beabstandete Vertiefungen (16) in Umfangserstreckungsrichtung **der ringförmigen Fläche (17)** in einer Reihe hintereinander verteilt angeordnet sind.

2. Fahrzeugreifen gemäß den Merkmalen von Anspruch 1,
wobei die Vertiefungen (16) in Umfangserstreckungsrichtung **der ringförmigen Fläche (17)** gleichmäßig verteilt angeordnet sind.

3. Fahrzeugreifen gemäß den Merkmalen von Anspruch 1 oder 2,
wobei die Vertiefungen (16) in der ringförmigen Fläche (17) mit gleicher Tiefe ausgebildet sind.

4. Fahrzeugreifen gemäß den Merkmalen von Anspruch 1 oder 2,
wobei die Vertiefungen (16) in der ringförmigen Fläche (17) mit unterschiedlicher Tiefe ausgebildet sind.

5. Fahrzeugreifen gemäß den Merkmalen von einem der vorangegangenen Ansprüche,
wobei die Vertiefungen (16) der ringförmigen Fläche (17) jeweils mit - insbesondere gleich großer - senkrecht zur Umfangserstreckungsrichtung der ringförmigen Fläche gemessener Breite b mit 0,2mm≤b≤1,5mm ausgebildet sind.

6. Fahrzeugreifen gemäß den Merkmalen von einem der vorangegangenen Ansprüche,
wobei die Vertiefungen (16) der ringförmigen Fläche (17) jeweils mit gleicher, längs der Umfangserstreckungsrichtung der ringförmigen Fläche(17) gemessener Länge L ausgebildet sind.

7. Fahrzeugreifen gemäß den Merkmalen von einem der vorangegangenen Ansprüche,
wobei die Vertiefungen (16) der ringförmigen Fläche (17) jeweils über einen Umfangserstreckungswinkel α der ringförmigen Fläche (17) erstreckt sind mit 5°≤α≤120°.

8. Fahrzeugreifen gemäß den Merkmalen von einem der Ansprüche 1 bis 5,
wobei die Vertiefungen (16) der ringförmigen Fläche (17) mit zumindest zum Teil unterschiedlicher, längs der Umfangserstreckungsrichtung der ringförmigen Fläche (17) gemessener Länge L ausgebildet sind.

9. Fahrzeugreifen gemäß den Merkmalen von einem der Ansprüche 1 bis 5,
wobei eine oder mehrere der Vertiefungen (16) der ringförmigen Fläche (17) im Lochgrund (8) mit ringsegmentförmiger Kontur ausgebildet sind.

10. Fahrzeugreifen gemäß den Merkmalen von Anspruch 8,
wobei im Lochgrund (8) vier hintereinander angeordnete - insbesondere konzentrische - ringsegmentförmige Vertiefungen (16) ausgebildet sind.

## Claims

1. Vehicle tyre comprising a tread pattern and spike holes (5) which are intended for receiving spikes (11) and are delimited inwardly in the radial direction R of the vehicle tyre by a bottom of the hole (8),
**characterized in that**
on an annular surface (17) of the bottom of the hole (8), a plurality of spaced-apart depressions (16) are arranged in such a way that they are distributed one behind the other in a row in the circumferential direction of extent of the annular surface (17).

2. Vehicle tyre according to the features of Claim 1,
wherein the depressions (16) are arranged in such a way that they are distributed uniformly in the circumferential direction of extent of the annular surface (17).

3. Vehicle tyre according to the features of Claim 1 or 2,
wherein the depressions (16) are formed in the annular surface (17) with the same depth.

4. Vehicle tyre according to the features of Claim 1 or 2,
wherein the depressions (16) are formed in the annular surface (17) with different depths.

5. Vehicle tyre according to the features of one of the preceding claims,
wherein the depressions (16) of the annular surface (17) are formed in each case with a width b - in particular of the same size - measured perpendicularly to the circumferential direction of extent of the annular surface, with 0.2 mm ≤ b ≤ 1.5 mm.

6. Vehicle tyre according to the features of one of the preceding claims,
wherein the depressions (16) of the annular surface (17) are formed in each case with the same length L, measured along the direction of circumferential extent of the annular surface (17).

7. Vehicle tyre according to the features of one of the preceding claims,
wherein the depressions (16) of the annular surface (17) are in each case made to extend over an angle of circumferential extent α of the annular surface (17), with 5° ≤ α ≤ 120°.

8. Vehicle tyre according to the features of one of Claims 1 to 5,
wherein the depressions (16) of the annular surface (17) are formed with at least partly different lengths L, measured along the direction of circumferential extent of the annular surface (17).

9. Vehicle tyre according to the features of one of Claims 1 to 5,
wherein one or more of the depressions (16) of the annular surface (17) are formed in the bottom of the hole (8) with a contour in the form of a segment of a ring.

10. Vehicle tyre according to the features of Claim 8,
wherein four - in particular concentric - depressions (16) in the form of segments of a ring arranged one behind the other are formed in the bottom of the hole (8) .

## Revendications

1. Pneu de véhicule comprenant un profil de bande de roulement et des orifices de pointes (5) destinés à recevoir des pointes (11), qui sont délimités vers l'intérieur dans la direction radiale R **du pneu de véhicule** respectivement par un fond d'orifice (8), **caractérisé en ce que**
sur une surface annulaire (17) du fond d'orifice (8) sont agencés, répartis les uns après les autres en une rangée, plusieurs creux (16) respectivement espacés les uns des autres dans la direction d'extension circonférentielle **de la surface annulaire (17).**

2. Pneu de véhicule selon les caractéristiques de la revendication 1, dans lequel les creux (16) sont agencés répartis uniformément dans la direction d'extension circonférentielle **de la surface annulaire (17)**.

3. Pneu de véhicule selon les caractéristiques de la revendication 1 ou 2, dans lequel les creux (16) sont configurés avec une profondeur identique dans la surface annulaire (17).

4. Pneu de véhicule selon les caractéristiques de la revendication 1 ou 2, dans lequel les creux (16) sont configurés avec une profondeur différente dans la surface annulaire (17).

5. Pneu de véhicule selon les caractéristiques de l'une quelconque des revendications précédentes, dans lequel les creux (16) de la surface annulaire (17) sont configurés respectivement avec une largeur b, notamment de taille identique, mesurée perpendiculairement à la direction d'extension circonférentielle de la surface annulaire avec 0,2 mm ≤ b ≤ 1,5 mm.

6. Pneu de véhicule selon les caractéristiques de l'une quelconque des revendications précédentes, dans lequel les creux (16) de la surface annulaire (17) sont configurés respectivement avec une longueur L identique, mesurée le long de la direction d'extension circonférentielle de la surface annulaire (17).

7. Pneu de véhicule selon les caractéristiques de l'une quelconque des revendications précédentes, dans lequel les creux (16) de la surface annulaire (17) s'étendent respectivement sur un angle d'extension circonférentiel α de la surface annulaire (17) avec 5° ≤ α ≤ 120°.

8. Pneu de véhicule selon les caractéristiques de l'une quelconque des revendications 1 à 5, dans lequel les creux (16) de la surface annulaire (17) sont configurés avec une longueur L au moins en partie différente, mesurée le long de la direction d'extension circonférentielle de la surface annulaire (17).

9. Pneu de véhicule selon les caractéristiques de l'une quelconque des revendications 1 à 5, dans lequel un ou plusieurs des creux (16) de la surface annulaire (17) sont configurés dans le fond d'orifice (8) avec un contour en forme de segment d'anneau.

10. Pneu de véhicule selon les caractéristiques de la revendication 8, dans lequel quatre creux (16) en forme de segment d'anneau agencés les uns après les autres, notamment concentriques, sont formés dans le fond d'orifice (8).
